(19) Europäisches Patentamt
European Patent Office
Office européen des brevets

(11) Veröffentlichungsnummer: **0 224 635 B1**

(12) **EUROPÄISCHE PATENTSCHRIFT**

(45) Veröffentlichungstag der Patentschrift: **11.09.91**

(51) Int. Cl.⁵: **G01V 1/40**

(21) Anmeldenummer: **86106622.3**

(22) Anmeldetag: **15.05.86**

(54) **Anordnung zur Durchschallung eines Gesteinskomplexes.**

(30) Priorität: **28.11.85 DE 3542006**

(43) Veröffentlichungstag der Anmeldung:
**10.06.87 Patentblatt 87/24**

(45) Bekanntmachung des Hinweises auf die
Patenterteilung:
**11.09.91 Patentblatt 91/37**

(84) Benannte Vertragsstaaten:
**BE CH DE FR GB LI NL**

(56) Entgegenhaltungen:
**FR-A- 2 442 455**
**GB-A- 2 129 559**
**US-A- 2 018 737**
**US-A- 4 011 924**

**TECHNOLOGY NEWS FROM THE BUREAU OF
MINES, US DEPARTMENT OF THE INTERIOR,
Nr. 153, August 1982; "In situ determination
of geotechnical properties by acoustic methods"**

(73) Patentinhaber: **GSF-Forschungszentrum für
Umwelt und Gesundheit, GmbH
Ingolstädter Landstrasse 1
W-8042 Neuherberg(DE)**

(72) Erfinder: **Zienczyk, Erich
Körnerstrasse 24
W-3160 Lehrte(DE)**

## Beschreibung

Die Erfindung betrifft eine Anordnung zur Durchschallung eines Gesteinskomplexes zwischen zwei dafür vorgesehenen Bohrlöchern mit P-Kompressions- und/oder S-Scherwellen, die von einem Signalgeber in einem der Bohrlöcher erzeugt und von einem Empfänger im anderen Bohrloch aufgenommen werden.

Die Untersuchung des Ausbreitungsverhaltens seismischer Wellen (Geschwindigkeit, Dämpfung) ermöglicht es, auf zerstörungsfreiem Wege Aussagen über Eigenschaften ansonsten unzugänglicher Gebirgsteile zu gewinnen. Dabei sind Messungen von Bohrloch zu Bohrloch von besonderem Interesse. Da die Dämpfung der seismischen Wellen in unterschiedlichen Materialien unterschiedlich stark, jedoch immer proportional zur Frequenz ist, muß das Spektrum des Quellensignals der Meßaufgabe (Material, Entfernung) angepaßt sein.

Eine allgemein benutzte Signalerzeugung mit einem Hammer genügt diesen Anforderungen in keiner Beziehung. Eine Kohärenz und Reproduzierbarkeit des erzeugten Signalspektrums ist praktisch auszuschließen. Auch andere Methoden, z. B. die mit Ultraschallquellen oder Sparkern in flüssigkeitsgefüllten Bohrlöchern, bieten keine Möglichkeit, ein seismisches Signal in beliebiger Tiefe eines Bohrloches mit Variierbarkeit der Abstrahlcharakteristik von Kompressions-und/oder Scherwellen zu erzeugen, da insbesonders die Ankopplung der Signalquelle an den durchschallenden Gesteinskomplex wegen der auftretenden oberflächlichen Auflockerungszone, die Distanz zwischen den Bohrlöchern sowie die Meßsignalaufnahme problematisch, praktisch unlösbar ist.

Die der Erfindung gestellte Aufgabe besteht darin, die e. g. Anordnung derart auszubilden, daß mit ihr die Laufzeiten von Kompressions (P)- und/oder Scherwellen (S) in Gesteins- oder Salzkomplexen zerstörungsfrei über weite Entfernungen und durch unzugängliche Gebirgsteile gemessen werden können.

Erfindungsgemäß wird diese Aufgabe mittels der im Anspruch 1 aufgeführten Merkmale gelöst.

Die übrigen Ansprüche geben vorteilhafte Weiterbildungen und Ausführungsformen der Erfindung wieder.

Bei der Entwicklung des erfindungsgemäßen P/S-Gebers ist es demnach gelungen, ein extrem kohärentes und reproduzierbares, aber auch vom Strahlungsspektrum frequenzmäßig günstiges und vorderflankig-steiles Signal zu erzeugen. Diese Eigenschaften des Gebers bei Benutzung einer Registrierapparatur als Signal-Averager mit Stapelmöglichkeit bieten eine relativ große Durchschallungsweite bei relativ kleiner Geberenergie, um das Meßsignal noch aus dem Noise (Bodenunruhe-Signal) herauszuheben und auswerten zu können. Der P/S-Geber liefert ein vorderflankig-triggerndes TTL-Signal und bietet eine praktisch verzögerungsfreie Auslösung der Signalaufzeichnung. Er läßt sich mit Hilfe der dafür entwickelten Fernsteuerung vom Registrierort bedienen. Die Fernsteuerung der Abstrahlcharakteristik des P/S-Gebers ist definiert veränderbar. Die Lage des P/S-Gebers läßt sich mit Hilfe eines dafür vorgesehenen Gestänges definieren und er ist einsetzbar in vertikalen, wie auch in horizontalen Bohrlöchern. Der P/S-Geber ist zwar für den Einsatz im trockenem Bohrloch entwickelt, läßt sich jedoch prinzipiell auch für flüssigkeitsgefüllte Bohrlöcher umrüsten.

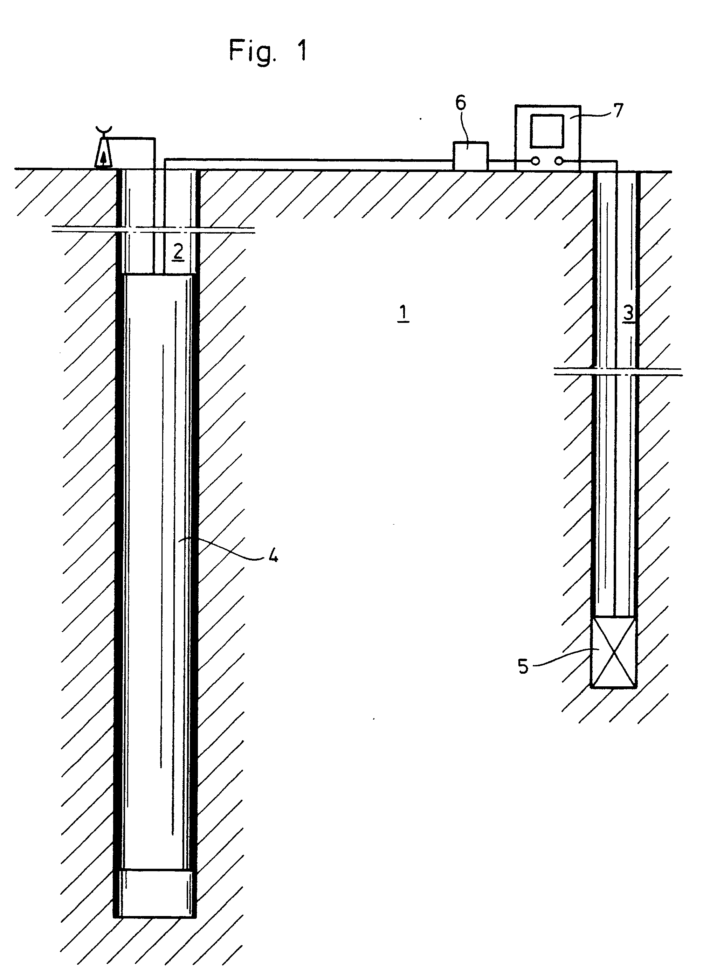

Die Erfindung wird im folgenden anhand eines Ausführungsbeispiels mittels der Fig. 1 - 8 näher erläutert.

Hierbei zeigen die

| Fig. 1 | eine schematische Ansicht der Anordnung, |
| Fig. 2 und 3 | Teile des Schallgebers, |
| Fig. 4 | die Steuerung der Anordnung und |
| Fig. 5 bis 8 | Signale. |

Mit der Anordnung gemäß Fig. 1 erfolgt eine Durchschallung des Gesteinskomplexes 1 zwischen zwei dafür vorgesehenen Bohrlöchern 2 und 3. In einem der Bohrlöcher 2 wird ein Signalgeber 4 (seismische Quelle) mit Triggermöglichkeit des Empfängers 5 eingesetzt. Im anderen Bohrloch 3 befindet sich dieser Signalempfänger 5 (Beschleunigungsaufnehmer bzw. Geophon bekannter Bauart). Durch die mit der Anordnung gemessenen Laufzeitänderungen der P-Kompressionswellen und S-Scherwellen können Aussagen über das Gebirgsverhalten gemacht werden. Die Durchschallungsweite, die Auflösung und die Genauigkeit der Meßmethode hängen im wesentlichen von den Eigenschaften des Signalgebers 4 ab. Dazu gehören große Signalgeber-Energie, günstiger Spektralbereich, exakte und wiederholbare Triggerung des Signalempfängers 5 und Variieren der Abstrahlungscharakteristik für P/S-Wellen.

Da sich die genannten Eigenschaften einer idealen seismischen Quelle einsatzbedingt (tiefe und durchmesserbegrenzte Bohrlöcher) technisch schwer realisieren lassen, wurde der erfindungsgemäße Signalgeber 4 (seismische Quelle) entwickelt, der in Zusammenarbeit mit einer Steuerung 6 und Registrierapparatur als Signal-Averager 7 gute Auflösung der gemessenen Laufzeiten, exaktere Bestimmung der P/S-Einsätze, wie auch eine Variierung der Abstrahlcharakteristik von P/S-Wellen in Bezug auf den Signalempfänger 5 bietet.

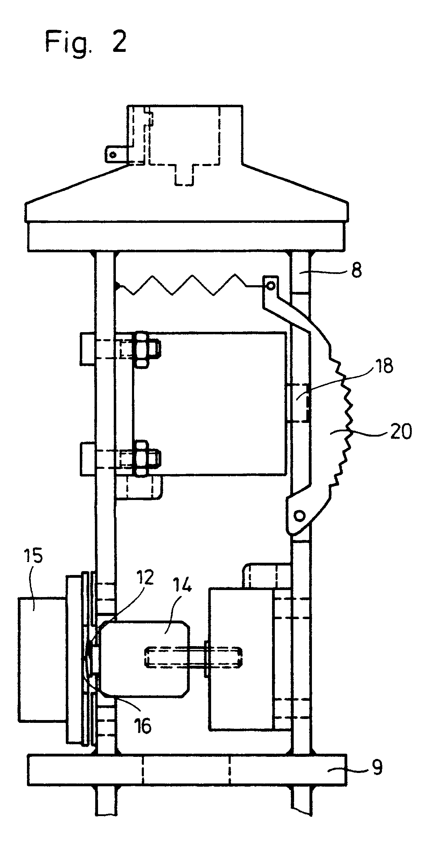

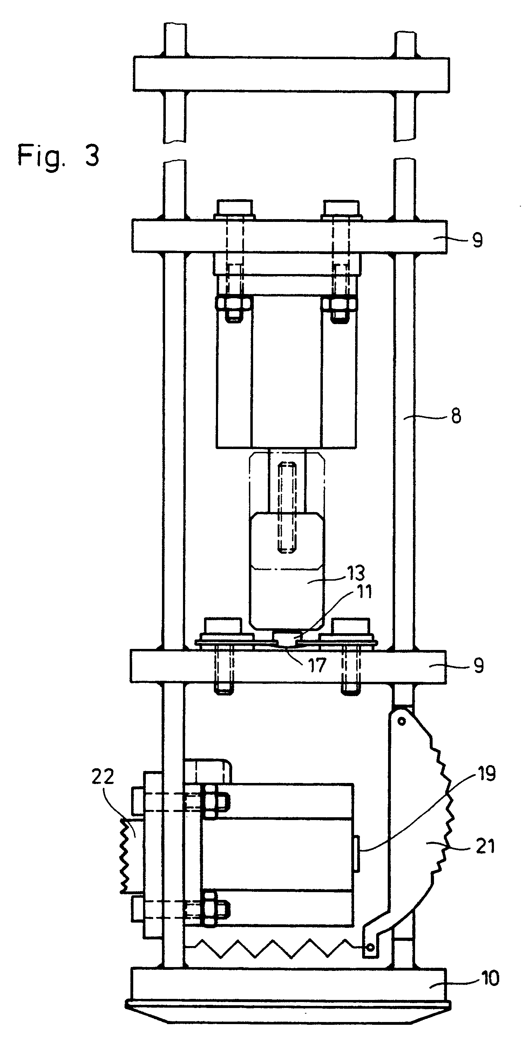

Bei der Entwicklung des P/S-Gebers 4, dessen oberes und unteres Teil in Fig. 2 bzw. Fig. 3 dargestellt sind, wurde darauf geachtet, daß ein extrem kohärentes und reproduzierbares, aber auch vom Strahlungsspektrum fequenzmäßig günstiges und vorderflankig-steiles Signal erzeugbar ist. Bei der Konzipierung des P/S-Gebers 4 stand die Aufgabe im Vordergrund, daß bei Benutzung einer Registrierapparatur als Signal-Averager 7 mit Stapelmöglichkeit bei Erzeugung eines extrem kohärenten und repdoduzierbaren Signals auf die hohe Leistung des Gebers 4 verzichtet werden kann, um das Meßsignal noch aus dem Noise (Bodenunruhe-Signal) herauszuheben und auswerten zu können. Der P/S-Geber 4 besitzt in seinem zylindrischen Gehäuse 8 mit Stabilisierungsebenen 9 und Stirnkappe 10 zwei integrierte Pneuma-Geber 11 und 12 (Arbeitsdruck 6 - 10 bar Preßluft bzw. Stickstoff), von denen einer 11 in axialer, der andere in radialer Richtung 12 anregt. Er ist einsetzbar für vertikale als auch für horizontale Bohrlöcher 2, 3 mit einer Tiefe bis 30 m (die Einsatztiefe kann auch erweitert werden).

Die Lage des Gebers 4 läßt sich im Bohrloch 2 mit Hilfe eines dafür vorgesehenen, aber nicht näher dargestellten Gestänges definieren.

Der Geber 4 läßt sich in beliebiger Höhe des Bohrlochs 2 pneumatisch arbeitsdruck-parallel (durch Anlegen des Arbeitsdruckes auf die zentrale Druckleitung) arretieren und bietet eine gute Ankopplung an das Gebirge. Er ist vorgesehen für Bohrlöcher 2 mit einem Durchmesser von 116 mm, kann aber durch Aufsetzen zweier Erweiterungsadapter auch in Bohrlöchern mit einem Durchmesser von 131 mm eingesetzt werden. Die gesamte Länge des Gebers 4 beträgt 90 cm.

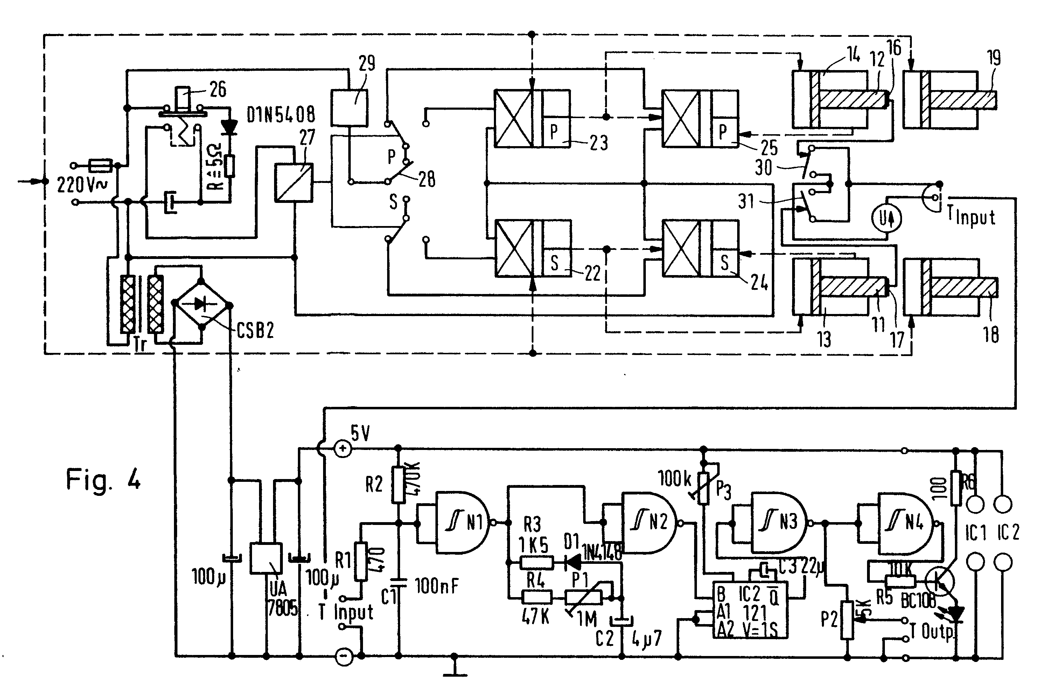

Für die Erzeugung des axialen und radialen Signals wurden pneumatisch betriebene Kurzhubzylinder 13 und 14 für die Pneuma-Geber 11 und 12 verwendet. Der radiale Geber 12 wirkt als Hammer mit Übertragung der Energie zur Erzeugung der Scherwellen über einen Amboß 15 auf den Gesteinskomplex 1 (Fig. 1), während der axiale Geber 11 ebenfalls wie ein Hammer über eine der Stabilisierungsebenen 9 und ein Teil des Gehäuses 8 auf die Stirnkappe 10 einwirkt. An den Stirnflächen der beiden Geber 11 und 12 sind Kontakte 16 und 17 (s. a. Fig. 4) angeordnet, durch die die Signalaufzeichnung ausgelöst wird.

Die Arretierung des Gebers 4 erfolgt mittels zwei radial im Gehäuseoberteil (Fig. 2) bzw. -Unterteil (Fig. 3) ausgerichteten und pneumatisch betriebenen Arretierungszylindern 18, 19 mit einer Spannkraft von zweimal 440 N. Beide Arretierungszylinder 18 und 19 (s. a. Fig. 4) üben auf einen Kipphebel 20 bzw. 21 mit gezackter Oberfläche gegen Federdruck diese Spannkraft auf den Gesteinskomplex aus, wobei sich die gezahnten Oberflächen in der Bohrlochwandung verkrallen. Beim unteren Arretierungszylinder 19 ist als Gegenlager zum Kipphebel 21 ein Bolzen 22 mit ebenfalls gezackter Oberfläche vorgesehen (die Ventile zur Betätigung der Kurzhub- u. Arretierungszylinder 12 - 14, 19, 20 sind im Gehäuse 8 untergebracht, jedoch nicht dargestellt.

Der axiale, wie auch der radiale Signalerzeuger 11 bzw. 12 arbeiten nach dem gleichen Prinzip. Als pneumatische Anreger wurden beschleunigungsstarke Kurzhubzylinder 13 und 14 mit Rückführungsmöglichkeit verwendet. Um einen definierten Druckimpuls für die Kurzhubzylinder 13, 14 erzeugen zu können, ist ein kaskadiertes Zeitansteuerungsverfahren gemäß Fig. 4 vorgesehen. Zur Ansteuerung der Kurzhubzylinder 13, 14 werden Membranmagnetventile (22 und 23) mit einer Öffnungszeit von 20 ms und kleinem Durchlaßwiderstand, die durch einen definierten 20 ms-Relais-Impuls angesteuert werden, verwendet.

Um das erzeugte Gebersignal reproduzierbarer zu machen, ist auch für eine zeitlich definierte und mit der Ansteuerungszeit verknüpfte Entlüftungszeit der Entlüftungsventile 24, 25 der Kurzhubzylinder 11, 13 bzw. 12, 14 gesorgt.

Das Steuergerät 6 gemäß Fig. 4 bietet eine Auslösemöglichkeit des axialen bzw. radialen Gebers 11 (17) bzw. 12 (16) und verfügt über ein exaktes prellfreies, vorderflankigtriggerndes TTL-Signal T mit einer Torzeit von 1 sec. - ausreichend, um das emittierte Signal durch den Empfänger 5 zu empfangen und zu registrieren. Bei der dargestellten Schaltung sind die pneumatisch beaufschlagten Ansteuerungsleitungen gestrichelt und die elektronisch ansteuernden (U = 220 V ) ausgezogen gezeichnet. Ausgelöst wird eine Messung mittels des Druckschalters 26, der einen Stromimpuls der Dauer von 15 msec. (5µ/350 V) über das Relais 27 und den Schalter 28 entweder auf die Ansteuerung zur Erzeugung der Kompressionswellen (P; erster Strang) oder den der Scherwellen (S; zweiter Strang) legt. Im dargestellten Fall liegt der Schalter 28 auf dem Kompressionswellenstrang P in Ausstellung (die im folgenden beschriebenen Vorgänge entsprechen denen im Scherwellenstrang S).

Das Relais 27 kippt den Schalter 28 für 15 msec. um. In dieser Zeit wird Druck auf das Magnetventil 23 (mit einer Eigenschaltzeit von 20 msec.) gegeben, welches den Kurzhubzylinder 12, 14 betätigt. Nach 15 msec. kippt der Schalter 28 auf seine Ausgangsstellung zurück und betätigt somit das Entlüftungsventil 25 zum Kurzhubzylinder 14 für die letzten 5 msec. des Bewegungsvorgangs des Kurzhubzylinders 12, 14, damit keine unnötige Hemmung dieses Bewegungsvorgangs entsteht. Der ganze Auslösevorgang wird zum Zwecke der Reproduzierbarkeit und zur Gewährleistung eines genauen Meßzeitablaufes beim Nullphasendurchgang der angelegten Wechselspannung begonnen, wofür der Nullphasen-Durchgangs-Detektor 29 sorgt.

Berührt der prellfreie Kontakt 16 an der Stirn des Gebers 12 den Amboß 15 (bzw. bei Geber 11 der Kontakt 17 die Stabilisierungsebene 9), so wird quasi ein weiterer Schalter 30 bzw. 31 betätigt, der die Erzeugung des Triggerimpulses $T_{output}$ für die Registriereinrichtung 7 des Empfängers 5 einleitet. Der Impuls $T_{Input}$ wird im elektronischen Schaltungsteil mit vier Gattern $N_1$ - $N_4$, $IC_1$ und $IC_2$ - (SN74121) in das steile vorderflankig-triggernde TTL-Signal $T_{output}$ aufbereitet und steht dem Empfänger 5 1 sec. lang zur Verfügung. In dieser Zeit ist die Messung der im Empfänger 5 ankommenden Kompressions- oder Scherwelle bereits erfolgt, da deren Laufzeiten weit geringer sind als 1 sec.

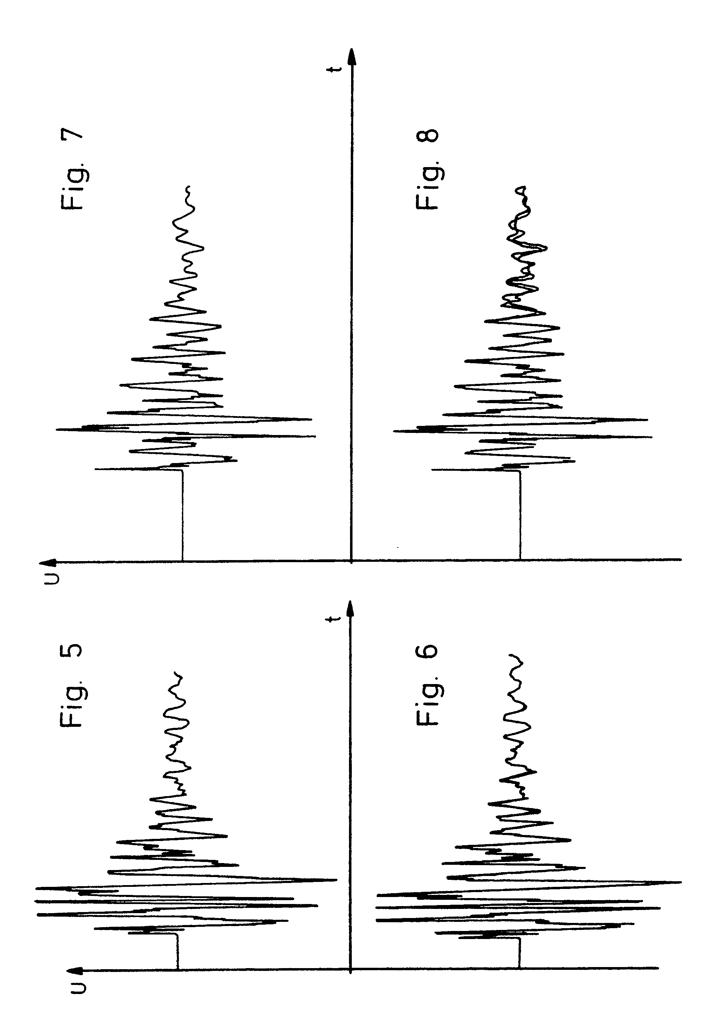

Anhand der angefertigten Spektrogramme - mit einem einzelnen Signal (Fig. 5) des axialen Gebers 11, 13, 17 bzw. (Fig. 7) des radialen Gebers 12, 14, 16 und jeweils zwei nacheinander aufgenommenen Signalen (Fig. 6 bzw. 8) der Gebersignale kann eindeutig festgestellt werden, daß die dem Konzept gestellten Ziele der Kohärenz und Reproduzierbarkeit der erzeugten Gebersignale erreicht worden sind und daß das erzeugte Signalspektrum im günstigen Frequenzbereich bis 2,5 KHz liegt. Mit dem Signal-Averager 7 wird das mehrmals nacheinander erzeugte Signal aufgenommen.

## Patentansprüche

1. Anordnung zur Durchschallung eines Gesteinskomplexes zwischen zwei dafür vorgesehenen Bohrlöchern mit P-Kompressions-und/oder S-Scherwellen, die von einem Signalgeber in einem der Bohrlöcher erzeugt und von einem Empfänger im anderen Bohrloch aufgenommen werden, enthaltend

   a) einen pneumatischen P/S-Geber (11, 12) durch welchen die Energie zur Erzeugung der P/S-Wellen aus einem Kurzhubzylinder (13, 14) hammerschlagähnlich auf ein Amboßteil (15, 10) übertragbar ist.
   b) eine Registrierapparatur als Signalaverager (7),
   c) einen an einer Stirnfläche des Gebers (11, 12) angebrachten Kontakt (16, 17) und
   d) eine Steuerung (6), die den P/S-Geber (11, 13, 17; 12 14, 16) und ein prellfreies Signal ($T_{input}$) auslöst, mit dem die Registrierapparatur ansteuerbar ist.

2. Anordnung nach Anspruch 1, dadurch gekennzeichnet, daß der Kurzhubzylinder (13; 14) eine Rückführungsmöglichkeit aufweist.

3. Anordnung nach Anspruch 1 und 2, gekennzeichnet durch eine kaskadierte Zeitansteuerung für die Druckimpulse der Kurzhubzylinder (11, 13; 12, 14), Membranmagnetventile (22, 23) zur pneumatischen Ansteuerung der Kurzhubzylinder (11, 13; 12, 14) und durch eine mit der Ansteuerungszeit verknüpfte Entlüftungszeit für Entlüftungsventile (24, 25) der Kurzhubzylinder (11, 13; 12, 14).

4. Anordnung nach Anspruch 1 oder einem der folgenden, dadurch gekennzeichnet, daß der Signalgeber in einem Gehäuse (8) angeordnet ist, welches mittels zweier, radial ausgerichteten Arretierungszylindern (18, 19) im Bohrloch (2) einspannbar ist.

5. Anordnung nach Anspruch 1 oder einem der folgenden, dadurch gekennzeichnet, daß die Steuerung (6) ein vorderflankig-triggerndes TTL-Signal ($T_{output}$) für den Empfänger (5) erzeugt.

## Claims

1. Arrangement for sounding a rock formation between two bore-holes, which are provided therefor, utilising P-compression waves and/or S-shearing waves, which are produced by a signal transmitter in one of the bore-holes and are picked-up by a receiver in the other borehole, comprising

   a) a pneumatic P/S transmitter (11, 12), by means of which the energy for producing the P/S waves from a short-stroke cylinder (13, 14) is transferable to an anvil (15, 10) in a similar manner to that of a hammer-blow,
   b) a recording apparatus, serving as a signal averager (7);
   c) a contact (16, 17), which is provided on an end face of the transmitter (11, 12); and
   d) a control unit (6), which triggers the P/S transmitter (11, 13, 17; 12, 14, 16) and a click-free signal ($T_{input}$),by means of which the recording apparatus is actuatable.

2. Arrangement according to claim 1, characterised in that the short-stroke cylinder (13; 14) has a return facility.

3. Arrangement according to claims 1 and 2, characterised by a cascaded time control for the pressure pulses of the short-stroke cylinders (11, 13; 12, 14), diaphragm solenoid valves (22, 23) for the pneumatic actuation of the short-stroke cylinders (11, 13; 12, 14) and an air vent time, associated with the actuation time, for air vent valves (24, 25) of the short-stroke cylinders (11, 13; 12, 14).

4. Arrangement according to claim 1, or one of the subsequent claims, characterised in that the signal transmitter is disposed in a housing (8), which is clampable in position in the borehole (2) by means of two radially orientated locking cylinders (18, 19).

5. Arrangement according to claim 1 or one of the subsequent claims, characterised in that the control unit (6) produces a leading edge triggering TTL signal ($T_{output}$) for the receiver (5).

**Revendications**

1. Dispositif de sondage acoustique d'un ensemble de roches entre deux forages prévus à cet effet avec des ondes de compression P et/ou des ondes de cisaillement S, qu'un émetteur produit dans l'un des forages et qu'un capteur reçoit dans un autre forage comprenant :

a) un émetteur pneumatique P/S (11, 12) grâce auquel on transmet l'énergie pour produire des ondes P/S à partir d'un cylindre à faible course (13, 14) par un coup de marteau sur une enclume (15, 10),

b) un enregistreur en tant que signal moyen (7),

c) un contact (16, 17) placé sur une surface frontale de l'émetteur (11, 12) et,

d) une commande (6) qui déclenche l'émetteur P/S (11, 13, 17 ; 12, 14, 16) et un signal sans rebond ($T_{input}$) qu'on peut commander avec l'enregistreur.

2. Dispositif selon la revendication 1, caractérisé en ce que le cylindre à faible course (13, 14) a une possibilité de se retirer.

3. Dispositif selon la revendication 1 et 2, caractérisé par une commande de temps en cascade pour les impulsions de pression du cylindre à faible course (11, 13 ; 12, 14), des électrovannes à membrane (22, 23) pour commander pneumatiquement le cylindre à faible course (11, 13 ; 12, 14) et par un temps de ventilation relié au temps de commande pour les vannes de ventilation (24, 25) du cylindre à faible course (11, 13 ; 12, 14).

4. Dispositif selon la revendication 1 ou l'une des suivantes, caractérisé en ce qu'on implante l'émetteur de signal dans un boîtier (8) et qu'on peut le fixer dans le forage (2) au moyen de deux cylindres de blocage radiaux (18, 19).

5. Dispositif selon la revendication 1 ou selon l'une des suivantes, caractérisé en ce qu'on réalise la commande (6) du capteur (5) à l'aide d'un signal TTL de déclenchement à flanc de montée ($T_{output}$).

Fig. 1

Fig. 2

## Fig. 3

Fig. 4

Fig. 5

Fig. 6

Fig. 7

Fig. 8

EP 0 224 635 B1